# EUROPÄISCHE PATENTANMELDUNG

(11) **EP 4 699 863 A1**
(43) Veröffentlichungstag der Anmeldung: **25.02.2026**
(21) Anmeldenummer: 25168307.4
(22) Anmeldetag: 03.04.2025
(51) Int. Cl.: B60P 1/02, B60P 7/13

(54) **VERFAHREN ZUM BETRIEB EINER FAHRERLOSEN TRANSPORTFAHRZEUGS UND FAHRERLOSES TRANSPORTFAHRZEUG**

(30) Priorität: 22.08.2024 DE 102024208001
(71) Anmelder: KAMAG Transporttechnik GmbH & Co. KG, 89079 Ulm (DE)
(72) Erfinder: Mozigemba, Marc, 88437 Maselheim (DE); Riedel, Gerald, 89233 Neu-Ulm (DE); Teuchler, Martin, 89075 Ulm (DE)
(74) Vertreter: Ullrich & Naumann PartG mbB

(57) **Zusammenfassung**

Ein Verfahren zum Betrieb eines fahrerlosen Transportfahrzeugs, beispielsweise eines Wechselbrückenhubwagens, einer Zugmaschine oder eines Industriehubwagens, zur Aufnahme eines Ladungsträgers, beispielsweise einer Wechselbrücke oder eines Containers, umfasset die folgenden Verfahrensschritten: Bereitstellen des Transportfahrzeugs in einer Aufnahmeposition, in welcher sich ein Hubtisch einer Aufnahmeeinheit unterhalb des Ladungsträgers befindet, Anheben des Hubtisches mindestens bis zu einer Kontaktierung des Hubtisches mit dem Ladungsträger, Verbringen mindestens eines Verriegelungselements von einer, vorzugsweise unter und/oder in dem Hubtisch eingebrachten, Entriegelungsposition in eine, vorzugsweise von dem Hubtisch zumindest teilweise abragende, Verriegelungsposition, Ermitteln einer Verriegelungselement-Position des mindestens einen Verriegelungselements unter Nutzung mindestens einer Verriegelungssensoreinrichtung und Ermitteln einer Ladungsträger-Position unter Nutzung mindestens einer Ladungsträgersensoreinrichtung, Erteilen einer Fahrtfreigabe durch eine Steuereinheit, nachdem von der Steuereinheit verifiziert worden ist, dass sich das mindestens eine Verriegelungselement in der Verriegelungsposition und der Ladungsträger in einer Transportposition befinden. Des Weiteren ist ein fahrerloses Transportfahrzeug beschrieben.

## Beschreibung

Die Erfindung betrifft ein Verfahren zum Betrieb eines fahrerlosen Transportfahrzeugs, beispielsweise eines Wechselbrückenhubwagens, einer Zugmaschine oder eines Industriehubwagens, zur Aufnahme eines Ladungsträgers, beispielsweise einer Wechselbrücke oder eines Containers

Des Weiteren betrifft die Erfindung ein fahrerloses Transportfahrzeug.

Aus der Praxis sind Logistikhöfe sowie ähnliche Umschlagplätze für Güter und Ladungsträger seit Jahren bekannt. Hierbei werden regelmäßig Ladungsträger wie Wechselbrücken innerhalb des Logistikhofs transportiert, beispielsweise von einer Laderampe auf einen Abstellplatz oder von einem ersten zu einem zweiten Abstellplatz verbracht. Der Transport erfolgt über sog. Transportfahrzeuge, beispielsweise Wechselbrückenhubwagen, mit welchen die Wechselbrücken aufgenommen, transportiert und an der gewünschten Stelle wieder abgesetzt werden. Um diese Transportaufträge durchzuführen, werden entsprechend ausgebildeter Fahrer für das Transportfahrzeug benötigt.

Unter anderem, da der Bedarf an Fahrern das Angebot bei weitem übertrifft und davon auszugehen ist, dass sich dieses Ungleichgewicht zukünftig verschärfen wird, bestehen seit Jahren Bestrebungen, fahrerlose Transportfahrzeuge zu entwickeln, welche Transportaufträge im Außenbereich und Mischbetrieb zuverlässig durchführen. Die hierbei aus der Praxis bekannten fahrerlosen Transportfahrzeuge sowie Verfahren zum Betreiben solcher Transportfahrzeuge liegen hinter den gestellten Anforderungen für einen zuverlässigen Betrieb jedoch noch weit zurück.

Insbesondere besteht dabei das Problem, dass die Transportfahrzeuge und die Verfahren zum automatisierten Fahren im Außenbereich und im Mischbetrieb von fahrerlosen Transportfahrzeugen aufwendig in ihrer Konstruktion sind und außerdem im Betrieb fehleranfällig sind. Insbesondere die für ein fahrerloses Transportfahrzeug notwendige komplizierte Sensorik ist fehleranfällig, da beispielsweise ein fehlerhaftes Sensorsignal zu einem Stillstand des Transportfahrzeugs führen kann. Dies kann wiederum den gesamten Ablauf stören oder sogar zum Erliegen bringen, so dass die bekannten Transportahrzeuge und Verfahren zum Betrieb der Transportfahrzeuge für einen tatsächlich automatisierten Betrieb nicht oder nur unzureichend geeignet sind.

Der vorliegenden Erfindung liegt daher die Aufgabe zugrunde, ein Verfahren zum Betrieb eines fahrerlosen Transportfahrzeugs und ein fahrerloses Transportfahrzeug derart auszugestalten und weiterzubilden, dass ein zuverlässiger und sicherer Betrieb mit einfachen Mitteln möglich ist.

In Bezug auf das Verfahren wird die voranstehende Aufgabe durch die Merkmale des Anspruches 1 gelöst. Damit ist ein Verfahren zum Betrieb eines fahrerlosen Transportfahrzeugs, beispielsweise eines Wechselbrückenhubwagens, einer Zugmaschine oder eines Industriehubwagens, zur Aufnahme eines Ladungsträgers, beispielsweise einer Wechselbrücke oder eines Containers, umfassend die folgenden Verfahrensschritten beansprucht:
- Bereitstellen des Transportfahrzeugs in einer Aufnahmeposition, in welcher sich ein Hubtisch einer Aufnahmeeinheit unterhalb des Ladungsträgers befindet,
- Anheben des Hubtisches mindestens bis zu einer Kontaktierung des Hubtisches mit dem Ladungsträger,
- Verbringen mindestens eines Verriegelungselements von einer unter und/oder in dem Hubtisch eingebrachten Entriegelungsposition in eine von dem Hubtisch zumindest teilweise abragende Verriegelungsposition,
- Ermitteln einer Verriegelungselement-Position des mindestens einen Verriegelungselements unter Nutzung mindestens einer Verriegelungssensoreinrichtung und Ermitteln einer Ladungsträger-Position unter Nutzung mindestens einer Ladungsträgersensoreinrichtung,
- Erteilen einer Fahrtfreigabe durch eine Steuereinheit, nachdem von der Steuereinheit verifiziert worden ist, dass sich das mindestens eine Verriegelungselement in der Verriegelungsposition und der Ladungsträger in einer Transportposition befinden.

In erfindungsgemäßer Weise ist zunächst erkannt worden, dass der zuverlässige Betrieb des fahrerlosen Transportfahrzeugs erheblich von der zuverlässigen Ladungssicherung, d.h. von der korrekten Aufnahme und Verriegelung des Ladungsträgers, bestimmt wird. Dieser wesentliche Aspekt wird in erfindungsgemäßer Weise dadurch verbessert, dass die Verriegelungselement-Position sowie die Ladungsträger-Position erfasst werden, wenn der Hubtisch den Ladungsträger bereits kontaktiert hat, vorzugsweise zumindest geringfügig angehoben hat. In vorteilhafter Weise werden die Verriegelungselement-Positionen sämtlicher Verriegelungselemente bestimmt, sollte mehr als ein Verriegelungselement angeordnet sein. Somit werden die Verriegelung und die korrekte Positionierung des Ladungsträgers in der Position geprüft, in der sich der Ladungsträger während des Transports zu seinem Zielort befindet. Ein weiterer Vorteil besteht darin, dass durch die Überprüfung der Ladungsträger-Position nach dem Verbringen des mindestens einem Verriegelungselements in die Verriegelungsposition erfasst werden kann, ob diese/dieses korrekt in dem Ladungsträger eingerastet ist/sind. Falls keine korrekte Einrastung erfolgt ist, wird der Ladungsträger durch das mindestens eine Verriegelungselemente aus der Transportposition geschoben, was somit über die Ladungsträgersensoreinrichtung erkannt werden kann. Indem die Steuereinheit die Fahrtfreigabe erst erteilt, wenn sich das mindestens eine Verriegelungselement in der Verriegelungsposition befindet und sich der Ladungsträger in der Ladungsträger-Position befindet, ist sichergestellt, dass der Ladungsträger korrekt gesichert ist. Ein weiterer Vorteil besteht darin, dass durch das erfindungsgemäße Verfahren eine weitere Überwachung nach der Fahrtfreigabe nicht notwendig ist, insbesondere ist es denkbar, dass lediglich eine einmalige Prüfung der Verriegelungselement-Position und der Ladungsträger-Position erfolgt. Somit wird verhindert, dass das Fahrzeug aufgrund eines fehlerhaften Sensorsignal zum Stillstand kommen muss. Des Weiteren ermöglicht das erfindungsgemäße Verfahren die Nutzung von besonders einfachen und somit robusten Sensoren, die im Sinne eines Schalters ausgebildet sein könnten, d.h. lediglich EIN/AUS bzw. 1/0 ausgeben.

In vorteilhafter Weise befindet sich das mindestens eine Verriegelungselement in der Entriegelungsposition zumindest teilweise, vorzugsweise vollständig, in bzw. unter dem Hubtisch. Mit anderen Worten ist es von Vorteil, wenn das Verriegelungselement in der Entriegelungsposition nicht über die Ladefläche ragt bzw. absteht, auf welcher der Ladungsträger aufgenommen wird.

In weiter vorteilhafter Weise kann das mindestens eine Verriegelungselement in der Verriegelungsposition zumindest teilweise, vorzugsweise vollständig, von dem Hubtisch abragen. Mit anderen Worten ist es von Vorteil, wenn das Verriegelungselement in der Verriegelungsposition von der Ladefläche abragt, auf welcher der Ladungsträger aufgenommen werden kann.

Es wird darauf hingewiesen, dass im Rahmen der Offenbarung von Anspruch 1 die Ermittlung der Verriegelungselement-Position vor, während und/oder nach der Ermittlung der Ladungsträger-Position erfolgen kann.

Bei dem Transportfahrzeug kann es sich beispielsweise um ein Transportfahrzeug zur Nutzung in einem automatisierten Transportsystem handeln, wie es in der Hafenlogistik, der Hoflogistik oder in der Intralogistik in der Industrie anwendbar ist. Generell kann es sich um ein Transportfahrzeug handeln, welches für beliebige Gütertransporte innerhalb eines Betriebsgeländes nutzbar ist. Beispielsweise kann das Transportfahrzeug als ein Wechselbrückenhubwagen, als Zugmaschine, als Industriehubwagen etc. ausgebildet sein.

Der Ausdruck "fahrerloses Transportfahrzeug" beschreibt im Rahmen dieser Offenbarung ein automatisiert fahrendes Transportfahrzeug, welches automatisch gesteuert und geführt wird und dem Zweck der Bewegung von Gütern dient. Zur Vereinfachung wird im Folgenden nicht immer ein "fahrerloses Transportfahrzeug", sondern schlicht ein "Transportfahrzeug" beschrieben, wobei es sich dabei um ein "fahrerloses Transportfahrzeug" handelt. Dabei muss nicht zwangsweise ausgeschlossen sein, dass eine Person in dem fahrerlosen Transportfahrzeug anwesend ist und dieses ggf. bei Bedarf steuert.

Der Ausdruck "Zielposition" beschreibt im Rahmen dieser Offenbarung eine von der "Startposition", an welcher der Ladungsträger aufgenommen worden ist, abweichende Position. Bei der Zielposition kann es sich vorteilhafterweise um die Position handeln, an welcher der Ladungsträger abgesetzt werden soll, beispielsweise ein Stellplatz und/oder eine Verladerampe, wobei dies nicht zwangsweise der Fall sein muss.

Der Ausdruck "Transportposition" beschreibt im Rahmen dieser Offenbarung die derartige Positionierung des Ladungsträgers, beispielsweise einer Wechselbrücke, gegenüber dem Fahrzeug bzw. an dem Hubtisch, dass sich der über das mindestens eine Verriegelungselement gesicherte Ladungsträger in jeder Betriebsart, vorzugsweise einschließlich Not-Aus und Lastübergabe, nicht aus der festgelegten Lage bewegen kann, vorzugsweise, da das mindestens eine Verriegelungselement mit dem entsprechenden Bereich des Ladungsträgers, beispielsweise einem Eckbeschlag, wechselwirken kann, insbesondere in diesen eingreifen und/oder an diesem hintergreifen kann.

Sofern im Rahmen dieser Offenbarung, insbesondere in den Ansprüchen, von einem ersten und einem zweiten Element die Rede ist, schließt dies nicht aus, dass weitere dieser Elemente vorgesehen sein können. Beispielsweise könnten, wenn ein erstes Verriegelungselement und ein zweites Verriegelungselement beschrieben bzw. beansprucht sind, ein oder mehrere weitere Verriegelungselemente vorgesehen sein.

Das erfindungsgemäße Transportfahrzeug umfasst eine Vielzahl von Merkmalen auf, die eine verfahrensmäßige Ausprägung aufweisen. Diese Merkmale des erfindungsgemäßen Transportfahrzeugs und die damit einhergehenden Vorteile, die in der allgemeinen Beschreibung, der Figurenbeschreibung und den von Anspruch 9 abhängigen Ansprüchen enthalten sind, können ausdrücklich Teil des erfindungsgemäßen Verfahrens sein.

In vorteilhafter Weise kann das mindestens eine Verriegelungselement mit einer Kraft von der Entriegelungsposition in die Verriegelungsposition verbracht werden, die ausreichend groß ist, um den Ladungsträger anzuheben. Dadurch ist es möglich, dass das Verriegelungselement den Ladungsträger anhebt, wenn es in die Verriegelungsposition gebracht wird. In weiter vorteilhafter Weise ist die Ladungsträgersensoreinrichtung derart angeordnet und ausgebildet, dass erkannt wird, wenn der Ladungsträger durch das Verriegelungselement angehoben worden ist und sich somit nicht mehr in der Transportposition befindet. Dadurch kann verhindert werden, dass eine Fahrtfreigabe erfolgt, wenn der Ladungsträger nicht korrekt durch das mindestens eine Verriegelungselement gesichert ist.

Gemäß einer vorteilhaften Ausgestaltung kann eine Fahrtfreigabe durch die Steuereinheit versagt werden, wenn keine Verifizierung der Transportposition und der Verriegelungsposition durch die Steuereinheit erfolgt. Zusätzlich ist dabei denkbar und von Vorteil, dass bei einem Versagen der Fahrtfreigabe durch die Steuereinheit das mindestens eine Verriegelungselement in die Entriegelungsposition verbracht wird und/oder dass der Hubtisch abgelassen wird. Dies bietet die Möglichkeit, den Aufnahmeprozess zur wiederholen oder bei Bedarf Ladungsträger neu zu erfassen bzw. zu detektieren, dessen Pose neu zu ermitteln und den Aufnahmeprozess zu wiederholen.

In vorteilhafter Weise kann vor dem Verbringen des mindestens einen Verriegelungselements in die Verriegelungsposition die Ladungsträger-Position unter Nutzung der mindestens einen Ladungsträgersensoreinrichtung ermittelt werden und kann durch die Steuereinheit das Verbringen des mindestens einen Verriegelungselements in die Verriegelungsposition veranlasst werden, nachdem von der Steuereinheit verifiziert worden ist, dass sich der Ladungsträger in der Transportposition befindet. Durch diese Maßnahme wird verhindert, dass das Verriegelungselement den Ladungsträger anhebt und/oder beschädigt, wenn dieser sich nicht in der Position befindet, in der eine Verriegelung erfolgen kann.

Gemäß einer vorteilhaften Ausgestaltung können an der Aufnahmeeinheit ein erster Anschlag und ein zu dem ersten Anschlag entgegen der Fahrtrichtung gesehen versetzt positionierter zweiter Anschlag angeordnet sein, wobei vor Aufnahme eines ersten, längeren Ladungsträgers der zweite Anschlag in eine zumindest teilweise in den Hubtisch eingebrachte Deaktivierungsposition verbracht werden kann und wobei vor Aufnahme eines zweiten, kürzeren Ladungsträgers der zweite Anschlag in eine zumindest teilweise vom dem Hubtisch abragende Aktivierungsposition verbracht werden kann. Dabei ist es denkbar, dass mit der Übermittlung von Fahraufträgen aus einer Logistiksteuerung auch mitgeteilt wird, welcher Typ von Ladungsträger - kurz oder lang - aufgenommen werden soll. Alternativ oder zusätzlich kann dies über eine entsprechende Sensorik (bspw. Lidar oder Kamera) von dem Transportfahrzeug erkannt und/oder händisch von einer Bedienperson an das Transportfahrzeug übermittelt werden. Je nachdem welcher Typ von Ladungsträger aufgenommen werden soll, kann beispielsweise von der Steuereinheit, der zweite Anschlag ausgebracht (Aktivierungsposition) oder eingebracht (Deaktivierungsposition) werden. Des Weiteren ist es denkbar, dass mehrere zweite Anschläge angeordnet sein können, so dass mehr als zwei unterschiedliche Ladungsträgertypen (beispielsweise lang, mittel und kurz) aufgenommen werden können. Diese mehreren zweiten Anschläge können jeweils einzelne oder mehrere bzw. alle der in der nachstehenden Beschreibung sowie in den Ansprüchen beschriebenen Merkmale des zweiten Anschlags aufweisen.

In vorteilhafter Weise kann die Fahrtfreigabe durch die Steuereinheit erteilt werden, nachdem die Steuereinheit über eine erste Anschlagberührungssensoreinrichtung oder eine zweite Anschlagberührungssensoreinrichtung verifiziert hat, dass der Ladungsträger den ersten Anschlag oder den zweiten Anschlag berührt. Durch Auswertung der Anschlagberührungssensoreinrichtung kann somit geprüft werden, dass sich das Fahrzeug tatsächlich in der Aufnahmeposition befindet. In weiter vorteilhafter Weise erfolgt diese Prüfung bevor der Hubtisch angehoben wird.

Gemäß einer vorteilhaften Ausgestaltung kann durch die Steuereinheit mittels einer Anschlagpositionssensoreinrichtung erkannt werden, ob sich der zweite Anschlag in der Aktivierungsposition oder in der Deaktivierungsposition befindet. Dies hat den Vorteil, dass durch die Steuereinheit erkannt werden kann, ob die erste Anschlagberührungssensoreinrichtung, wenn die Deaktivierungsposition detektiert worden ist, oder die zweite Anschlagberührungssensoreinrichtung, wenn die Aktivierungsposition detektiert worden ist, ausgewertet wird.

Gemäß einer alternativen Ausführungsform könnte lediglich ein zweiter Anschlag, nicht jedoch ein erster Anschlag, angeordnet sein. Dieser könnte eines oder mehrere der in Bezug auf den zweiten Anschlag in den Ansprüchen sowie der Beschreibung offenbarten Merkmale aufweisen, d.h. beispielsweise zwischen einer Aktivierungsposition und einer Deaktivierungsposition bewegbar sein, und/oder eine Anschlagberührungsvorrichtung aufweisen und/oder eine Anschlagpositionssensoreinrichtung aufweisen. Des Weiteren könnte dieser zweite Anschlag in Fahrtrichtung gesehen händisch und/oder über ein von der Steuereinheit bedienbares Stellelement in und entgegen der Fahrtrichtung in verschiedenen Positionen angeordnet werden, beispielsweise verschoben werden. Dadurch ist es möglich, den zweiten Anschlag in einer für die Größe des aufzunehmenden Ladungsträgers passenden Position anzuordnen.

In vorteilhafter Weise können zwischen der Erteilung der Fahrtfreigabe und dem Erreichen einer Zielposition die mindestens eine Verriegelungssensoreinrichtung, die mindestens eine Ladungsträgersensoreinrichtung, die erste Anschlagberührungssensoreinrichtung, die zweite Anschlagberührungssensoreinrichtung und/oder die Anschlagpositionssensoreinrichtung von der Steuereinheit nicht ausgewertet werden. Alternativ oder zusätzlich können zwischen der Erteilung der Fahrtfreigabe und dem Erreichen einer Zielposition die mindestens eine Verriegelungssensoreinrichtung, die mindestens eine Ladungsträgersensoreinrichtung, die erste Anschlagberührungssensoreinrichtung, die zweite Anschlagberührungssensoreinrichtung und/oder die Anschlagpositionssensoreinrichtung von der Steuereinheit deaktiviert werden. Da während der Fahrt keine Sensorsignale ausgewertet werden bzw. die Sensoreinrichtungen ausgeschaltet sind, kann die Fahrt auch nicht durch einen fehlerhaften Sensor gestört werden. In vorteilhafter Weise ist es zusätzlich denkbar, dass die Steuereinheit dazu eingerichtet ist, ein Absenken des Hubtisches und ein Verbringen des mindestens einen Verriegelungselements in die Entriegelungsposition nach dem Beginn der Fahrt nicht zu ermöglichen und dies erst wieder zu ermöglichen, wenn die Zielposition erreicht worden ist.

In weiter vorteilhafter Weise könnte die Steuereinheit dazu ausgebildet sein, dass ein Bewegen des mindestens einen Verriegelungselements ausschließlich bei Stillstand des Transportfahrzeugs möglich ist und/oder dass das Absenken des Hubtisches bzw. das Erreichen der unteren Hubtischendlage nur möglich ist, wenn sich das mindestens eine Verriegelungselement in der Entriegelungsposition befindet. Dabei wird insbesondere bei Wechselbrücken als Ladungsträgern verhindert, dass es zu Beschädigungen kommt, wenn die Wechselbrücke noch an dem Hubtisch fixiert ist und "zu weit" abgelassen wird.

Gemäß einer vorteilhaften Ausgestaltung könnte die Steuereinheit dazu eingerichtet sein, das Transportfahrzeug von einer Vorposition vor dem Ladungsträger aus rückwärts in die Aufnahmeposition zu fahren. In vorteilhafter Weise kann das Transportfahrzeug in der Vorposition derart zu der Wechselbrücke ausgerichtet sein, dass die Trajektorie zur Aufnahmeposition im Wesentlichen eine Gerade darstellt. Die Toleranz, mit welcher die Aufnahmeposition erreicht werden muss, ergibt sich aus der Größe des Bereichs des Ladungsträgers, beispielsweise Öffnungen von Eckbeschlägen, in welchen das mindestens eine Verriegelungselement eingreifen muss. Dies kann in bzw. entgegen der Fahrtrichtung wenige Zentimeter betragen. Es kann vorteilhaft sein, dass die Steuereinheit dazu eingerichtet ist, die ermittelte Aufnahmeposition in Fahrtrichtung gesehen, um wenige Zentimeter nach vorne zu versetzen, so dass das Transportfahrzeug zu frühzeitig anhält, um dieses dann in langsamer Geschwindigkeit zu reversieren bis die erste Anschlagberührungssensoreinrichtung oder die zweite Anschlagberührungssensoreinrichtung auslöst, was dann zum Stoppen des Fahrzeuges durch die Steuereinheit führt. Aufgrund der geringen Geschwindigkeit ist der Bremsweg kurz und der Stopp nahezu unmittelbar.

In weiter vorteilhafter Weise kann die Steuereinheit dazu eingerichtet sein, anhand der Information über die Größe bzw. die Länge des aufgenommenen Ladungsträgers, beispielsweise verifiziert über den ersten oder den zweiten Anschlag, die Schutzfelder, also den Überwachungsbereich der Personenerkennung des Transportfahrzeugs umzuschalten, da je nach Größe des aufgenommenen Ladungsträgers dieser seitlich und rückseitig unterschiedlich weit über die Transportfahrzeugkontur. Das Transportfahrzeug kann anschließend mit dem aufgenommenen Ladungsträger sicher fahren. Im Konkreten könnte die Steuereinheit dazu ausgebildet sein, dass
- wenn die Steuereinheit über eine Hubtischsensoreinrichtung verifiziert, dass der Hubtisch sich an seiner untersten Stellung befindet, und wenn über die Verriegelungssensoreinrichtung verifiziert wird, dass sich das mindestens eine Verriegelungselement in der Entriegelungsposition befindet, ein Schutzfeld entsprechend der Kontur des Transportfahrzeugs derart geschaltet wird, dass dieses klein genug ist, um bei einem geraden Unterfahren des Ladungsträgers keine Elemente des Ladungsträgers, beispielsweise Stützen zu detektieren, und/oder
- wenn die Steuereinheit über die erste Anschlagberührungssensoreinrichtung oder über die zweite Anschlagberührungssensoreinrichtung die Größe des aufgenommenen Ladungsträgers verifiziert, ein Schutzfeld des Transportfahrzeugs entsprechend der Größe des Ladungsträgers eingestellt wird, und/oder
- wenn die Steuereinheit über eine Hubtischsensoreinrichtung verifiziert, dass der Hubtisch sich an seiner untersten Stellung befindet, und wenn über die Verriegelungssensoreinrichtung verifiziert wird, dass sich das mindestens eine Verriegelungselement in der Entriegelungsposition befindet, eine Fahrtfreigabe ohne Geschwindigkeitsbegrenzung erfolgt, und/oder
- wenn die Steuereinheit über die erste Anschlagberührungssensoreinrichtung oder über die zweite Anschlagberührungssensoreinrichtung die Anwesenheit eines Ladungsträgers verifiziert, keine Fahrtfreigabe für eine rückwärtige Fahrt erfolgen kann, und/oder
- wenn die Steuereinheit über eine Hubtischsensoreinrichtung verifiziert, dass der Hubtisch sich an seiner untersten Stellung befindet, und wenn über die Verriegelungssensoreinrichtung verifiziert wird, dass sich das mindestens eine Verriegelungselement in der Entriegelungsposition befindet, eine Fahrtfreigabe mit reduzierter Geschwindigkeit ausgegeben wird.

Gemäß einer vorteilhaften Ausgestaltung kann die Steuereinheit dazu ausgebildet sein, die Abstellhöhe des Ladungsträgers, insbesondere eine Wechselbrücke, zu ermitteln. Dazu erfasst die Steuereinheit aus einem Wegmesssystem im Hubtisch einen Messwert, wenn über die Ladungsträgersensoreinrichtung während des Anhebens des Hubtisches erfasst wird, dass sich der Ladungsträger in der Transportposition befindet. Wurde der aufzunehmende Ladungsträger korrekt aufgenommen, und die Schutzfelder anschließend umgeschaltet auf das Schutzfeld entsprechend der Größe des erkannten Ladungsträgers, so wird das Schutzfeld durch die Stützen des Ladungsträgers verletzt, d.h. die Schutzfelder erfassen die Stützen. Sind Personenschutzsensoren auf einer definierten Höhe, beispielsweise von Höhe 200 mm verbaut und wird der Hubtisch nun um Messwert + Höhe (beispielsweise 200mm) (+ Toleranz) angehoben, so muss das Schutzfeld frei sein. Die Abstellhöhe ist beispielsweise beim Anfahren an eine Verladerampe relevant, um Beschädigungen zu verhindern, wenn der Ladungsträger bzw. der Hubtisch zu weit oben ist. Es kann daher notwendig sein, den Ladungsträger vor Erreichen einer solchen Zielposition abzusenken.

Sofern eine Wechselbrücke oder ein ähnlicher Ladungsträger aufgenommen wird, kann das rückwärtige Unterfahren des Ladungsträgers bis zur Aufnahmeposition mit abgesenktem Hubtisch erfolgen. Beim Unterfahren der Wechselbrücke und wenn Einspurelemente des Hubtisches genutzt werden, um in den Führungstunnel der Wechselbrücke einzuspuren, könnte die mindestens eine Ladungsträgersensoreinrichtung bereits ein Objekt detektieren. Daher ist es von Vorteil, wenn die Steuereinheit dazu eingerichtet ist, in diesem Fall das Signal der mindestens einen Ladungsträgersensoreinrichtung zu ignorieren und/oder die Geschwindigkeit des Transportfahrzeugs zu verringern bzw. limitieren. Die Steuereinheit kann dazu eingerichtet sein, das Transportfahrzeug auf die vorab durch eine Wechselbrückenerkennung ermittelte Zielpose für die Aufnahme (Aufnahmeposition) zu fahren. Die erste und/oder zweite Anschlagberührungssensoreinrichtung löst dabei nicht notwendigerweise aus und wird von der Steuereinheit nicht ausgewertet.

In Bezug auf das fahrerlose Transportfahrzeug wird die voranstehende Aufgabe durch die Merkmale des Anspruchs 9 gelöst. Damit ist ein fahrerloses Transportfahrzeug, beispielsweise Wechselbrückenhubwagen, Zugmaschine oder Industriehubwagen, zur Aufnahme eines Ladungsträgers, beispielsweise einer Wechselbrücke oder eines Containers, mit einer Aufnahmeeinheit beansprucht umfassend einen Hubtisch zur Aufnahme des Ladungsträgers, mindestens einem Verriegelungselement, wobei das Verriegelungselement zwischen einer, vorzugsweise von dem Hubtisch zumindest teilweise abragenden, Verriegelungsposition und einer, vorzugsweise in dem Hubtisch eingebrachten, Entriegelungsposition verbringbar ist, mindestens einer Verriegelungssensoreinrichtung zur Bestimmung einer Verriegelungselement-Position, mindestens einer Ladungsträgersensoreinrichtung zur Bestimmung einer Ladungsträger-Position, und mit einer Steuereinheit, wobei die Steuereinheit mit der Aufnahmeeinheit, dem mindestens einen Verriegelungselement, der mindestens einen Verriegelungssensoreinrichtung und der mindestens einen Ladungsträgersensoreinrichtung verbunden und zur Durchführung eines Verfahrens nach einem der Ansprüche 1 bis 8 ausgebildet ist.

Das erfindungsgemäße Verfahren weist eine Vielzahl von Merkmalen auf, die eine vorrichtungsmäßige Ausprägung aufweisen. Diese Merkmale des erfindungsgemäßen Verfahrens und die damit einhergehenden Vorteile, die in der allgemeinen Beschreibung, der Figurenbeschreibung und den von Anspruch 1 abhängigen Ansprüchen enthalten sind, können ausdrücklich Teil des erfindungsgemäßen Transportfahrzeugs sein.

Gemäß einer vorteilhaften Ausgestaltung kann die Ladungsträgersensoreinrichtung einen ersten Sensor zur Überwachung eines ersten Eckbereichs des Ladungsträgers und einen zweiten Sensor zur Überwachung eines zweiten Eckbereichs des Ladungsträgers aufweisen. In vorteilhafter Weise könnten der erste und der zweite Sensor derart angeordnet sein, dass Eckbeschläge des Ladungsträgers überwacht werden, wenn sich der Ladungsträger in der Transportposition befindet. Da insbesondere bei Wechselbrücken die Eckbeschläge normiert sind, kann somit eine besonders einfache und zuverlässige Erkennung der Transportposition erfolgen. Sofern von mindestens einem der Sensoren somit der Ladungsträger nicht erkannt wird, kann davon ausgegangen werden, dass sich der Ladungsträger nicht in der Transportposition befindet. Somit kann davon abgesehen bzw. verhindert werden, dass mindestens eine Verriegelungselement in die Verriegelungsposition zu verbringen.

In weiter vorteilhafter Weise könnte das mindestens eine Verriegelungselement beispielsweise über ein oder mehrere Stellelemente, insbesondere Aktoren, bewegbar sein, wobei diese mit der Steuereinheit verbunden sein können, um von dieser gesteuert zu werden.

In vorteilhafter Weise kann die Verriegelungssensoreinrichtung einen ersten Sensor zur Überwachung der Verriegelungsposition des mindestens einen Verriegelungselements und einen zweiten Sensor zur Überwachung der Entriegelungsposition des mindestens einen Verriegelungselements aufweisen. Dies hat den Vorteil, dass eine redundante Überwachung der Verriegelungselement-Position möglich ist. Des Weiteren ist die separate Überwachung beider Positionen der Verriegelungselemente von Vorteil. Durch eine Überwachung der Entriegelungsposition beim Unterfahren des Ladungsträgers kann beispielsweise sichergestellt werden, dass die Kontur des Verriegelungselements im Hubtisch versinkt und die Auflagefläche für den Ladungsträger eben ist. Ein weiterer Vorteil kann hierbei darin bestehen, dass das mindestens eine Verriegelungselement nicht von dem Hubtisch abragt und somit eine Kollision zwischen dem mindestens einen Verriegelungselement und dem Ladungsträger verhindert werden könnte. Durch die Überwachung der Verriegelungsposition wird sichergestellt, dass das Verriegelungselement korrekt ausgefahren ist, um rückschließen zu können, dass der Ladungsträger korrekt verriegelt wurde. Sofern mehrere Verriegelungselemente angeordnet sind, können für diese jeweils solche erste und zweite Sensoren in der jeweiligen Verriegelungssensoreinrichtung angeordnet sein.

Gemäß einer vorteilhaften Ausgestaltung können ein erstes Verriegelungselement und ein zweites Verriegelungselement angeordnet sein. Dies hat den Vorteil, dass eine redundante und sichere Verriegelung realisiert ist. Gemäß einer weiteren vorteilhaften Ausgestaltung könnten ein erstes, ein zweites, ein drittes und ein viertes Verriegelungselement angeordnet sein, welche jeweils in einen Eckbereich, beispielsweise in einen Eckflansch, des Ladungsträger, insbesondere einer Wechselbrücke, eingreifen. Unabhängig von der Anzahl der Verriegelungselemente ist es denkbar und von Vorteil, dass dieses bzw. diese als Verriegelungskralle bzw. Verriegelungskrallen ausgebildet ist/sind. Die Verriegelungskralle kann in der Verriegelungsposition an einem entsprechenden Gegenstück des Ladungsträgers, beispielsweise von Eckbeschlägen des Ladungsträgers bzw. einer Wechselbrücke, hintergreifen und den Ladungsträger somit sichert.

In vorteilhafter Weise können das erste Verriegelungselement und das zweite Verriegelungselement derart positioniert sein, dass die Verriegelungselemente senkrecht zur Fahrtrichtung gesehen in gegenüberliegende Eckbereiche des Ladungsträgers eingreifen.

Gemäß einer vorteilhaften Ausgestaltung können an der Aufnahmeeinheit ein erster Anschlag und ein zu dem ersten Anschlag entgegen der Fahrtrichtung gesehen versetzt positionierter zweiter Anschlag angeordnet sein, wobei der zweite Anschlag zwischen einer zumindest teilweise in den Hubtisch eingebrachten Deaktivierungsposition und einer zumindest teilweise von dem Hubtisch abragenden Aktivierungsposition verbringbar sein kann. Die Verbringung des zweiten Anschlags zwischen den beiden genannten Positionen kann beispielsweise über ein oder mehrere Stellelemente, beispielsweise Aktoren, erfolgen. Gemäß einer weiteren vorteilhaften Ausgestaltung könnte der erste und/oder der zweite Anschlag in Fahrtrichtung gesehen verstellbar ausgebildet sein, so dass der erste und/oder der zweite Anschlag an die Länge der aufzunehmenden Ladungsträger anpassbar ist. Die Verstellung könnte automatisiert über ein entsprechendes Stellelement und/oder manuell erfolgen.

In vorteilhafter Weise kann an dem ersten Anschlag eine erste Anschlagberührungssensoreinrichtung und an dem zweiten Anschlag eine zweite Anschlagberührungssensoreinrichtung angeordnet sein. Dies hat den Vorteil, dass über die Anschlagberührungssensoreinheit, beispielsweise von der Steuereinheit, erkannt werden könnte, welcher Typ von Ladungsträger, beispielsweise kurz oder lang, aufgenommen ist. Im Konkreten könnte hierzu der erste und/oder der zweite Anschlag eine Wippeinrichtung aufweisen, welche durch den Ladungsträger eingedrückt wird, was wiederum über eine entsprechende Sensorik detektiert werden kann. Um eine möglichst geräuscharme Aufnahme des Ladungsträgers zu ermöglichen könnte ein Dämpfungsmittel an den Anschlägen ausgebildet sein. Generell ist es auch möglich, lediglich eine Sensorik, d.h. ohne eine Wippeinrichtung, vorzusehen.

Gemäß einer vorteilhaften Ausgestaltung kann an dem zweiten Anschlag eine Anschlagpositionssensoreinrichtung angeordnet sein, um zu erfassen, ob sich der zweite Anschlag in der Aktivierungsposition oder in der Deaktivierungsposition befindet. Im Konkreten ist es dabei denkbar, dass die Anschlagpositionssensoreinrichtung einen ersten Sensor, der die Aktivierungsposition überwacht, und einen zweiten Sensor, der die Deaktivierungsposition überwacht, aufweist. Dies hat den Vorteil, dass die Überwachung der Position des zweiten Anschlags redundant ist.

Gemäß einer vorteilhaften Ausgestaltung kann eine Hubtischsensoreinrichtung angeordnet sein. Diese könnte, beispielsweise über einen Näherungsschalter, die untere Endlage des Hubtisches überwachen. Mit anderen Worten könnte die Hubtischsensoreinrichtung detektieren, wenn der Hubtisch ganz unten, also auf Nulllage ist. Sofern die Endlage detektiert wird, kann angenommen werden, dass kein Ladungsträger bzw. keine Wechselbrücke aufliegt. Die Nulllage des Hubtisches könnte derart gewählt sein, dass damit die geringste gängigste Abstellhöhe, beispielsweise im Bereich von 1050 mm bis 1200 mm, insbesondere 1120mm, unterfahren werden kann.

In vorteilhafter Weise kann die Verriegelungssensoreinrichtung und/oder die mindestens eine Ladungsträgersensoreinrichtung und/oder die erste Anschlagberührungssensoreinrichtung und/oder die zweite Anschlagberührungssensoreinrichtung und/oder die Anschlagpositionssensoreinrichtung und/oder eine Hubtischsensoreinrichtung mindestens einen Schalter, insbesondere Näherungsschalter, beispielsweise einen induktiven Näherungsschalter, aufweisen. Die Nutzung von Schaltern, insbesondere von Näherungsschaltern, hat den Vorteil, dass diese - beispielsweise im Gegensatz zu Abstandssensoren bzw. Sensoren mit Wirkung auf Distanz - einfache Signaltypen (digital EIN/AUS bzw. 1/0) aufweisen.

In weiter vorteilhafter Weise kann eine Fahrwerkabsenkung angeordnet sein. Mit dieser könnte das Fahrwerk des Transportfahrzeugs derart abgesenkt werden, dass auch Ladungsträger mit sehr niedrigen Abstellhöhen aufgenommen werden können, wobei die Nulllage des Hubtisches relativ zum Fahrwerk gleichbleibt. Zusätzlich könnte ein optoelektronischen Sensor (insbesondere am Hubtisch oder am Fahrwerk) angeordnet sein, um einen Kollisionsschutz zu gewährleisten.

Es gibt nun verschiedene Möglichkeiten, die Lehre der vorliegenden Erfindung in vorteilhafter Weise auszugestalten und weiterzubilden. Dazu ist einerseits auf die den Ansprüchen 1 und 9 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung eine Seitenansicht ein Ausführungsbeispiel eines fahrerlosen Transportfahrzeugs mit einem Ladungsträger,
- Fig. 2: in einer schematischen Darstellung eine Seitenansicht das fahrerlose Transportfahrzeugs gemäß Fig. 1 mit einem weiteren Ladungsträger,
- Fig. 3: in einer schematischen Darstellung eine Seitenansicht eines Teils einer Aufnahmeeinheit eines fahrerlosen Transportfahrzeugs,
- Fig. 4: in einer schematischen Darstellung eine Aufsicht auf einen Teil der Aufnahmeeinheit gemäß Fig. 3,
- Fig. 5: in einer schematischen Darstellung eine vergrößerte Detailansicht von Fig. 4,
- Fig. 6: in einer schematischen Darstellung eine Ansicht von unten auf die Aufnahmeeinheit gemäß Fig. 3,
- Fig. 7: in einer schematischen Darstellung eine vergrößerte Detailansicht von Fig. 6,
- Fig. 8: in einer schematischen Darstellung eine Seitenansicht der Aufnahmeeinheit gemäß Fig. 3,
- Fig. 9: in einer schematischen Darstellung eine weitere Seitenansicht der Aufnahmeeinheit gemäß Fig. 3,
- Fig. 10: in einer schematischen Darstellung eine weitere Ansicht von unten der Aufnahmeeinheit gemäß Fig. 3,
- Fig. 11: in einer schematischen Darstellung eine vergrößerte Detailansicht von Fig. 10,
- Fig. 12: in einer schematischen Darstellung eine weitere Ansicht von unten der Aufnahmeeinheit gemäß Fig. 3,
- Fig. 13: in einer schematischen Darstellung eine vergrößerte Detailansicht von Fig. 12, und
- Fig. 14: ein Ablaufdiagramm eines Ausführungsbeispiels eines Verfahrens zum Betrieb eines fahrerlosen Transportfahrzeugs.

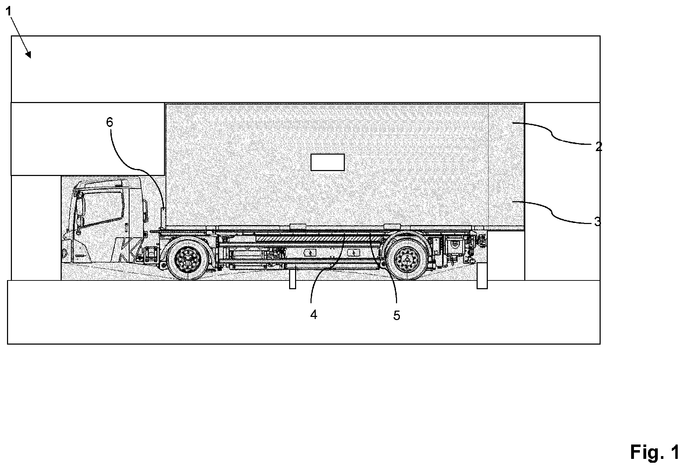

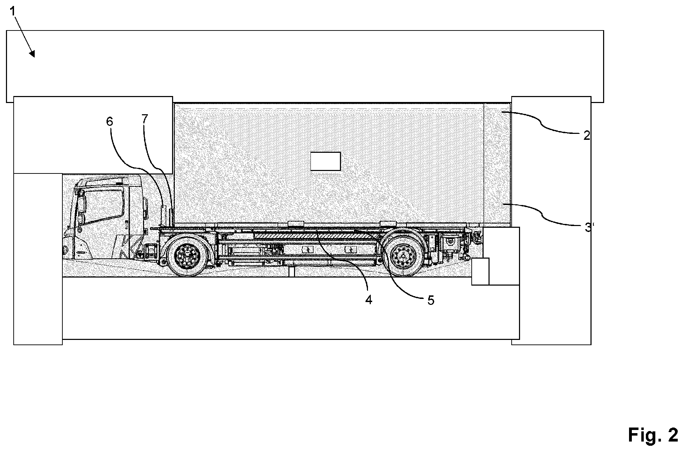

Die Fig. 1 und 2 zeigen ein Ausführungsbeispiel eines erfindungsgemäßen fahrerlosen Transportfahrzeugs 1. Im hier dargestellten Ausführungsbeispiel handelt es sich dabei um einen Wechselbrückenhubwagen zum Transport von Ladungsträgern 2, die als Wechselbrücke 3, 3' ausgebildet sind. Um die Wechselbrücke 3, 3' aufzunehmen, fährt das Transportfahrzeug 1 rückwärts unter die Wechselbrücke 3, 3', bis eine Aufnahmeposition erreicht ist. In dieser wird der Hubtisch 4 der Aufnahmeeinheit 5 angehoben, bis dieser in Kontakt mit der Wechselbrücke 3, 3' kommt und diese ebenfalls angehoben wird.

In Fig. 1 ist des Weiteren zu erkennen, dass die Wechselbrücke 3 in der Aufnahmeposition an einem Anschlag, in dem hier gezeigten Ausführungsbeispiel an dem ersten Anschlag 6, anliegt. Fig. 2 entspricht dem Ausführungsbeispiel gemäß Fig. 1 mit dem Unterschied, dass eine kürzere Wechselbrücke 3' aufgenommen ist. Daher befindet sich der zweite Anschlag 7 in Fig. 2 in der Aktivierungsposition, in der der zweite Anschlag 7 von dem Hubtisch 4 abragt, so dass die - kürzere - Wechselbrücke 3' an dem zweiten Anschlag 7 anliegt. In Fig. 1 hingegen befindet sich der zweite Anschlag 7 in der in den Hubtisch 5 eingebrachten Deaktivierungsposition. Des Weiteren weist das Transportfahrzeug 1 eine beispielsweise im Bereich der Fahrerkabine angeordnete Steuereinheit auf, die in dem hier gezeigten Ausführungsbeispiel nicht dargestellt ist.

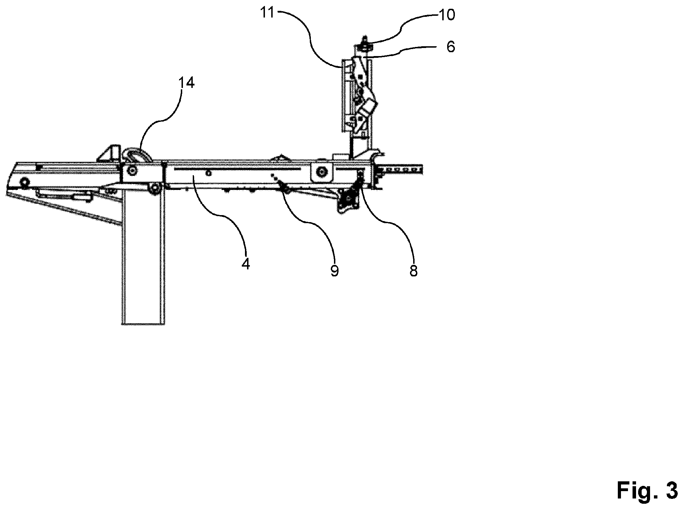

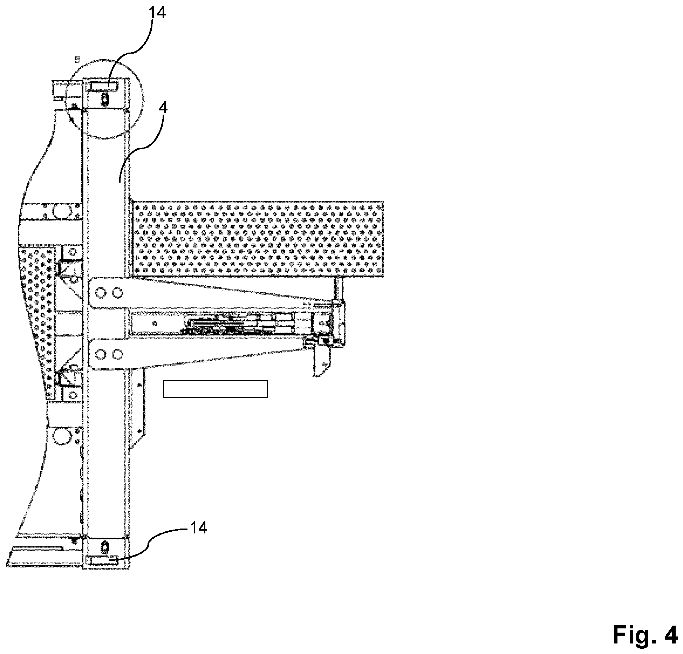

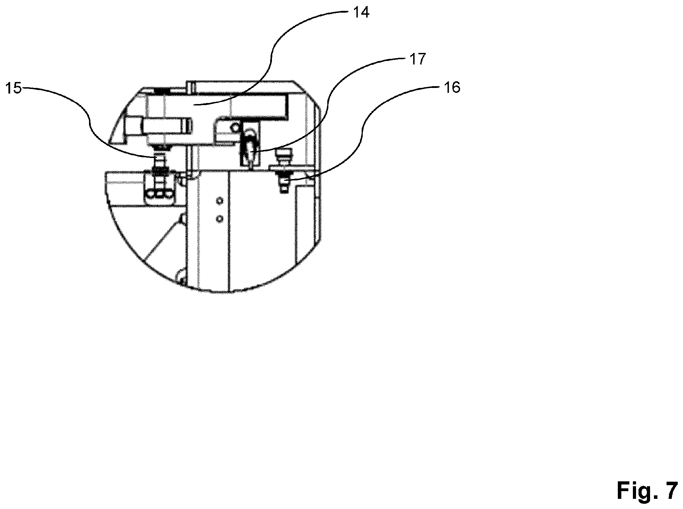

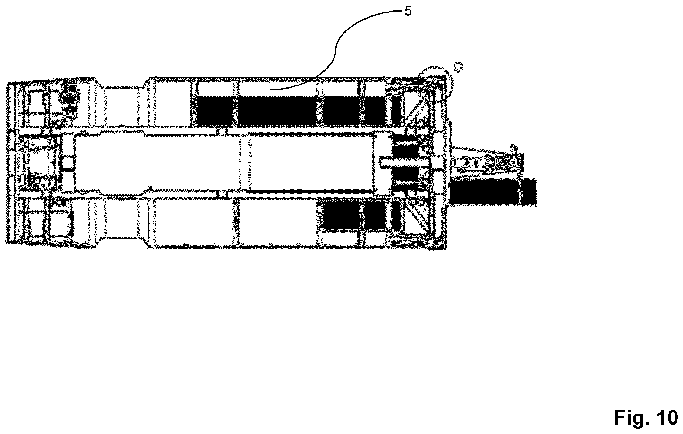

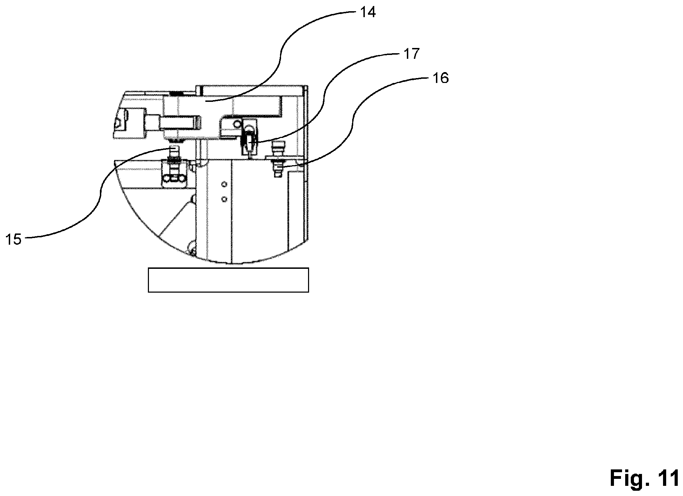

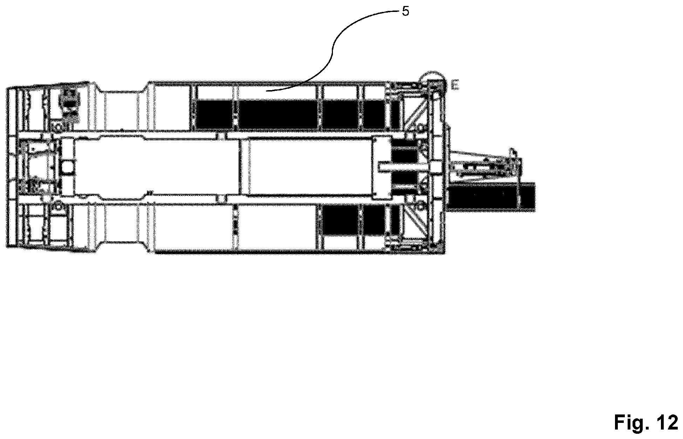

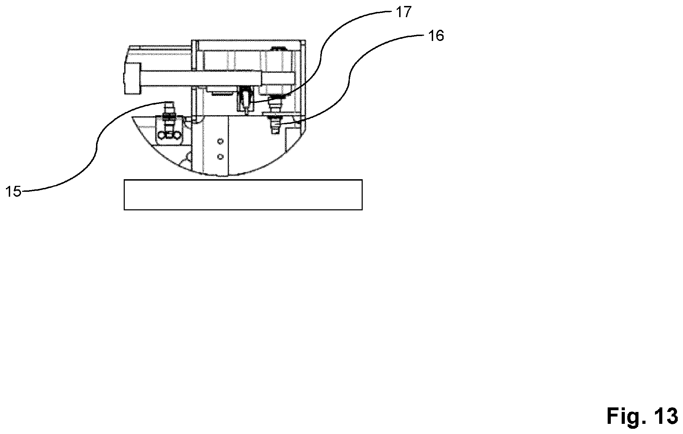

Die Fig. 3 bis 13 zeigen weitere Details des Transportfahrzeugs 1 gemäß Fig. 1.

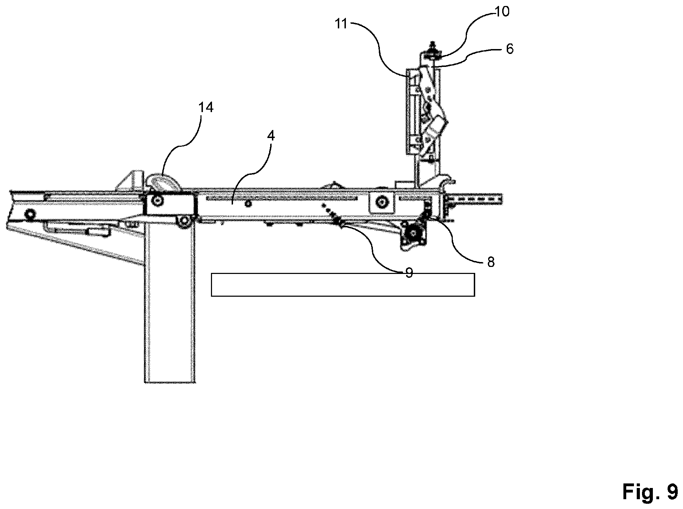

Fig. 3 und 9 zeigen eine Seitenansicht eines Teils des Hubtisches 4. Dabei befindet sich der zweite Anschlag 7 in der Deaktivierungsposition. Die Deaktivierungsposition wird über einen ersten Sensor 8 und die Aktivierungsposition des zweiten Anschlages 7 wird über einen zweiten Sensor 9 überwacht, wobei die Sensoren 8, 9 Teil einer Anschlagpositionssensoreinrichtung sind. Des Weiteren ist ein Sensor 10 der ersten Anschlagberührungssensoreinrichtung dargestellt, die überwacht, ob die Wechselbrücke den ersten Anschlag 6 berührt. Dabei ist des Weiteren eine Wippeinrichtung 11 an dem ersten Anschlag 6 ausgebildet, die von der Wechselbrücke 3 in Richtung des Anschlags, d.h. in Fahrtrichtung, gedrückt wird, was über den Sensor 10 detektiert werden kann. Die Wippeinrichtung 11 muss jedoch nicht zwangsweise vorgesehen sein, sondern kann lediglich ein Sensor 10 angeordnet sein.

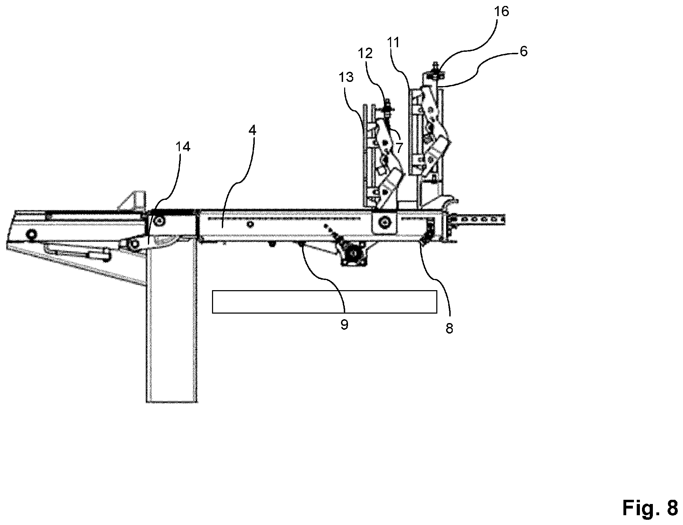

Die Darstellung gemäß Fig. 8 entspricht der Darstellung gemäß Fig. 3 und 9, wobei der zweite Anschlag 7 sich in Fig. 8 in der Aktivierungsposition befindet. Dabei ist zu erkennen, dass der zweite Anschlag 7 analog zu dem ersten Anschlag 6 einen Sensor 12 sowie eine Wippeinrichtung 13 aufweist, so dass über diese zweite Anschlagberührungssensoreinrichtung überwacht werden kann, ob der Ladungsträger 3' an dem zweiten Anschlag 7 anliegt. Die Wippeinrichtung 13 muss jedoch nicht zwangsweise vorgesehen sein, sondern kann lediglich ein Sensor 12 angeordnet sein.

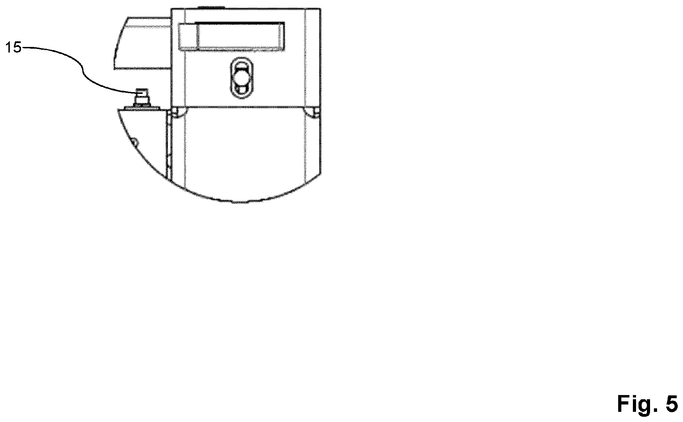

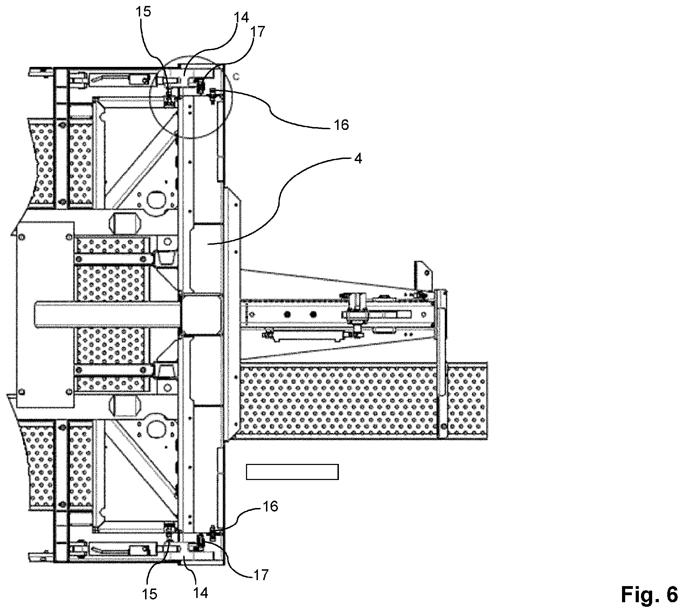

Insbesondere in der Darstellung von Fig. 9 ist das Verriegelungselement 14 zu erkennen, welches sich in der Verriegelungsposition befindet, in der es von dem Hubtisch 4 zumindest teilweise abragt. Sofern eine Wechselbrücke 3, 3' auf dem Hubtisch 4 aufliegt, greift das Verriegelungselement 14 in einen Eckbeschlag des Ladungsträgers 3, 3' ein. In den Darstellungen gemäß Fig. 3 und 8 befindet sich das Verriegelungselement 14 in der in den Hubtisch 4 eingebrachten Entriegelungsposition. Die Entriegelungsposition des Verriegelungselements 14 wird durch den ersten Sensor 15, die Verriegelungsposition des Verriegelungselements 14 durch den zweiten Sensor 16 überwacht (vgl. Fig. 5, 7, 11 und 13), die ein Teil der Verriegelungssensoreinrichtung sind. Des Weiteren geht aus den Fig. 6, 10 und 12 hervor, dass zwei solcher Verriegelungselement 14 nebst Verriegelungssensoreinrichtung angeordnet sind, nämlich an jeder Seite des Transportfahrzeugs 1 jeweils eine Verriegelungselement 14 mit einer Verriegelungssensoreinrichtung. Dabei können auch mehr als zwei Verriegelungselemente 14 angeordnet sein, beispielsweise drei oder vier Verriegelungselemente. Bei der Anordnung von vier Verriegelungselementen 14 könnten diese derart positioniert sein, dass jeweils ein Verriegelungselement 14 in einen Eckbereich des Ladungsträgers eingreift, beispielsweise in den Eckbeschlag einer Wechselbrücke. Dies schließt nicht aus, dass weitere Verriegelungselemente 14 angeordnet sein könnten.

Um die Ladungsträger-Position zu überwachen ist des Weiteren an jeder Seite des Transportfahrzeugs 1 jeweils ein Sensor 17 einer Ladungsträgersensoreinrichtung derart angeordnet, dass ein Eckbeschlag der Wechselbrücke 3, 3' überwacht werden kann.

Die Sensoren 8, 9, 10 12, 15, 16 und 17 können in besonders vorteilhafter Weise jeweils als Schalter, vorzugsweise als Näherungsschalter ausgebildet sein, insbesondere als induktive Näherungsschalter. Dies hat den Vorteil, dass einfache Sensorsignale (EIN/AUS) vorliegen. Des Weiteren ist durch das gezeigte Transportfahrzeug 1 ermöglicht, dass die Sensoren lediglich zur Fahrtfreigabe ausgewertet/geprüft werden, nicht jedoch während der Fahrt von der Aufnahmeposition zu dem Zielort.

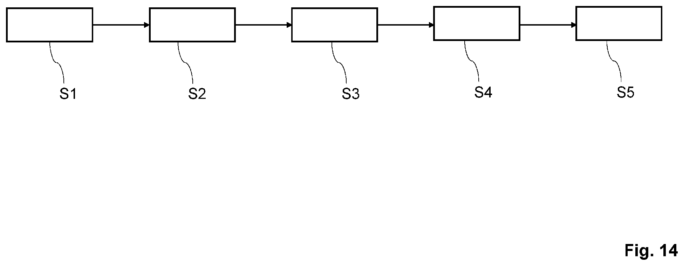

Fig. 14 zeigt ein Ablaufdiagramm eines Ausführungsbeispiels eines Verfahrens zum Betrieb eines fahrerlosen Transportfahrzeugs, beispielsweise gemäß den Fig. 1 bis 13. Danach wird in einem Schritt S1 das Transportfahrzeugs in einer Aufnahmeposition bereitgestellt, in welcher sich ein Hubtisch einer Aufnahmeeinheit unterhalb des Ladungsträgers befindet. In einem Schritt S2 wird der Hubtisches mindestens so weit angehoben, dass dieser den Ladungsträger kontaktiert, vorzugsweise anhebt.

In einem Schritt S3 wird das Verriegelungselement bzw. werden die Verriegelungselemente von einer unter und/oder in dem Hubtisch eingebrachten Entriegelungsposition in eine von dem Hubtisch zumindest teilweise abragende Verriegelungsposition verbracht. Dies kann beispielsweise über entsprechende Stellelemente erfolgen, die zur Bewegung des Verriegelungselements bzw. der Verriegelungselemente dienen. In einem Schritt S4 erfolgt eine Verriegelungselement-Position des Verriegelungselements bzw. der Verriegelungselemente unter Nutzung mindestens einer Verriegelungssensoreinrichtung sowie die Ermittlung einer Ladungsträger-Position unter Nutzung mindestens einer Ladungsträgersensoreinrichtung. Dabei kann die Verriegelungselement-Position vor, während und/oder nach der Ermittlung der Ladungsträger-Position erfolgen. In einem Schritt S5 wird von eine Fahrtfreigabe durch eine Steuereinheit erteilt, nachdem von der Steuereinheit verifiziert worden ist, dass sich das Verriegelungselement bzw. die Verriegelungselemente in der Verriegelungsposition und der Ladungsträger in der Transportposition befinden.

Weitere vorteilhafte Verfahrensschritte können entsprechend den abhängigen Ansprüchen vorgesehen sein.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

### Bezugszeichenliste

- 1: Transportfahrzeug
- 2: Ladungsträger
- 3, 3': Wechselbrücke
- 4: Hubtisch
- 5: Aufnahmeeinheit
- 6: ersten Anschlag
- 7: zweiter Anschlag
- 8: erster Sensor (Anschlagpositionssensoreinrichtung)
- 9: zweiter Sensor (Anschlagpositionssensoreinrichtung)
- 10: Sensor (erste Anschlagberührungssensoreinrichtung)
- 11: Wippeinrichtung
- 12: Sensor (zweite Anschlagberührungssensoreinrichtung)
- 13: Wippeinrichtung
- 14: Verriegelungselement
- 15: erster Sensor (Verriegelungssensoreinrichtung)
- 16: zweiter Sensor (Verriegelungssensoreinrichtung)
- 17: Sensor (Ladungsträgersensoreinrichtung)
- S1: Schritt
- S2: Schritt
- S3: Schritt
- S4: Schritt
- S4: Schritt

## Patentansprüche

1. Verfahren zum Betrieb eines fahrerlosen Transportfahrzeugs, beispielsweise eines Wechselbrückenhubwagens, einer Zugmaschine oder eines Industriehubwagens, zur Aufnahme eines Ladungsträgers, beispielsweise einer Wechselbrücke oder eines Containers, umfassend die folgenden Verfahrensschritten:
- Bereitstellen des Transportfahrzeugs in einer Aufnahmeposition, in welcher sich ein Hubtisch einer Aufnahmeeinheit unterhalb des Ladungsträgers befindet,
- Anheben des Hubtisches mindestens bis zu einer Kontaktierung des Hubtisches mit dem Ladungsträger,
- Verbringen mindestens eines Verriegelungselements von einer, vorzugsweise unter und/oder in dem Hubtisch eingebrachten, Entriegelungsposition in eine, vorzugsweise von dem Hubtisch zumindest teilweise abragende, Verriegelungsposition,
- Ermitteln einer Verriegelungselement-Position des mindestens einen Verriegelungselements unter Nutzung mindestens einer Verriegelungssensoreinrichtung und Ermitteln einer Ladungsträger-Position unter Nutzung mindestens einer Ladungsträgersensoreinrichtung,
- Erteilen einer Fahrtfreigabe durch eine Steuereinheit, nachdem von der Steuereinheit verifiziert worden ist, dass sich das mindestens eine Verriegelungselement in der Verriegelungsposition und der Ladungsträger in einer Transportposition befinden.

2. Verfahren nach Anspruch 1, **dadurch gekennzeichnet, dass** das mindestens eine Verriegelungselement mit einer Kraft von der Entriegelungsposition in die Verriegelungsposition verbracht wird, die ausreichend groß ist, um den Ladungsträger anzuheben, und/oder
dass eine Fahrtfreigabe durch die Steuereinheit versagt wird, wenn keine Verifizierung durch die Steuereinheit erfolgt.

3. Verfahren nach Anspruch 2, **dadurch gekennzeichnet, dass** bei einem Versagen der Fahrtfreigabe durch die Steuereinheit das mindestens eine Verriegelungselement in die Entriegelungsposition verbracht wird und/oder dass der Hubtisch abgelassen wird.

4. Verfahren nach einem der Ansprüche 1 bis 3, **dadurch gekennzeichnet, dass** vor dem Verbringen des mindestens eines Verriegelungselements in die Verriegelungsposition die Ladungsträger-Position unter Nutzung der mindestens einen Ladungsträgersensoreinrichtung ermittelt wird und dass durch die Steuereinheit das Verbringen des mindestens einen Verriegelungselements in die Verriegelungsposition veranlasst wird, nachdem von der Steuereinheit verifiziert worden ist, dass sich der Ladungsträger in der Transportposition befindet.

5. Verfahren nach einem der Ansprüche 1 bis 4, **dadurch gekennzeichnet, dass** an der Aufnahmeeinheit ein erster Anschlag und ein zu dem ersten Anschlag entgegen der Fahrtrichtung gesehen versetzt positionierter zweiter Anschlag angeordnet sind, wobei vor Aufnahme eines ersten, längeren Ladungsträgers der zweite Anschlag in eine zumindest teilweise in den Hubtisch eingebrachte Deaktivierungsposition verbracht wird und wobei vor Aufnahme eines zweiten, kürzeren Ladungsträgers der zweite Anschlag in eine zumindest teilweise vom dem Hubtisch abragende Aktivierungsposition verbracht wird.

6. Verfahren Anspruch 5, **dadurch gekennzeichnet, dass** die Fahrtfreigabe durch die Steuereinheit erteilt wird, nachdem die Steuereinheit über eine erste Anschlagberührungssensoreinrichtung oder eine zweite Anschlagberührungssensoreinrichtung verifiziert hat, dass der Ladungsträger den ersten Anschlag oder den zweiten Anschlag berührt.

7. Verfahren nach einem der Ansprüche 5 oder 6, **dadurch gekennzeichnet, dass** durch die Steuereinheit mittels einer Anschlagpositionssensoreinrichtung erkannt wird, ob sich der zweite Anschlag in der Aktivierungsposition oder in der Deaktivierungsposition befindet, vorzugsweise
wobei die Steuereinheit die erste Anschlagberührungssensoreinrichtung auswertet, wenn sich der zweite Anschlag in der Deaktivierungsposition befindet und die zweite Anschlagberührungssensoreinrichtung auswertet, wenn sich der zweite Anschlag in der Aktivierungsposition befindet.

8. Verfahren nach einem der Ansprüche 1 bis 7, **dadurch gekennzeichnet, dass** zwischen der Erteilung der Fahrtfreigabe und dem Erreichen einer Zielposition die mindestens eine Verriegelungssensoreinrichtung, die mindestens eine Ladungsträgersensoreinrichtung, die erste Anschlagberührungssensoreinrichtung, die zweite Anschlagberührungssensoreinrichtung und/oder die Anschlagpositionssensoreinrichtung von der Steuereinheit nicht ausgewertet werden, und/oder dass zwischen der Erteilung der Fahrtfreigabe und dem Erreichen einer Zielposition die mindestens eine Verriegelungssensoreinrichtung, die mindestens eine Ladungsträgersensoreinrichtung, die erste Anschlagberührungssensoreinrichtung, die zweite Anschlagberührungssensoreinrichtung und/oder die Anschlagpositionssensoreinrichtung von der Steuereinheit deaktiviert werden.

9. Fahrerloses Transportfahrzeug, beispielsweise Wechselbrückenhubwagen, Zugmaschine oder Industriehubwagen, zur Aufnahme eines Ladungsträgers, beispielsweise einer Wechselbrücke oder eines Containers, mit einer Aufnahmeeinheit umfassend einen Hubtisch zur Aufnahme des Ladungsträgers,
mindestens einem Verriegelungselement, wobei das Verriegelungselement zwischen einer, vorzugsweise von dem Hubtisch zumindest teilweise abragenden, Verriegelungsposition und einer, vorzugsweise in dem Hubtisch eingebrachten, Entriegelungsposition verbringbar ist,
mindestens einer Verriegelungssensoreinrichtung zur Bestimmung einer Verriegelungselement-Position,
mindestens einer Ladungsträgersensoreinrichtung zur Bestimmung einer Ladungsträger-Position, und
mit einer Steuereinheit, wobei die Steuereinheit mit der Aufnahmeeinheit, dem mindestens einen Verriegelungselement, der mindestens einen Verriegelungssensoreinrichtung und der mindestens einen Ladungsträgersensoreinrichtung verbunden und zur Durchführung eines Verfahrens nach einem der Ansprüche 1 bis 8 ausgebildet ist.

10. Transportfahrzeug nach Anspruch 9, **dadurch gekennzeichnet, dass** die Verriegelungssensoreinrichtung einen ersten Sensor zur Überwachung der Verriegelungsposition des mindestens einen Verriegelungselements und einen zweiten Sensor zur Überwachung der Entriegelungsposition des mindestens einen Verriegelungselements aufweist, und/oder
dass ein erstes Verriegelungselement und ein zweites Verriegelungselement angeordnet sind.

11. Transportfahrzeug nach Anspruch 10, **dadurch gekennzeichnet, dass** das erste Verriegelungselement und das zweite Verriegelungselement derart positioniert sind, dass die Verriegelungselemente senkrecht zur Fahrtrichtung gesehen in gegenüberliegende Eckbereiche des Ladungsträgers eingreifen.

12. Transportfahrzeug nach einem der Ansprüche 9 bis 11, **dadurch gekennzeichnet, dass** an der Aufnahmeeinheit ein erster Anschlag und ein zu dem ersten Anschlag entgegen der Fahrtrichtung gesehen versetzt positionierter zweiter Anschlag angeordnet sind, wobei der zweite Anschlag zwischen einer zumindest teilweise in den Hubtisch eingebrachten Deaktivierungsposition und einer zumindest teilweise von dem Hubtisch abragenden Aktivierungsposition verbringbar ist, und/oder
dass an dem ersten Anschlag eine erste Anschlagberührungssensoreinrichtung und an dem zweiten Anschlag eine zweite Anschlagberührungssensoreinrichtung angeordnet sind.

13. Transportfahrzeug nach Anspruch 12, **dadurch gekennzeichnet, dass** an dem zweiten Anschlag eine Anschlagpositionssensoreinrichtung angeordnet ist, um zu erfassen, ob sich der zweite Anschlag in der Aktivierungsposition oder in der Deaktivierungsposition befindet.

14. Transportfahrzeug nach Anspruch 13, **dadurch gekennzeichnet, dass** die Anschlagpositionssensoreinrichtung einen ersten Sensor zur Überwachung der Deaktivierungsposition und einen zweiten Sensor zur Überwachung der Aktivierungsposition aufweist.

15. Transportfahrzeug nach einem der Ansprüche 9 bis 14, **dadurch gekennzeichnet, dass** die Verriegelungssensoreinrichtung und/oder die mindestens eine Ladungsträgersensoreinrichtung und/oder die erste Anschlagberührungssensoreinrichtung und/oder die zweite Anschlagberührungssensoreinrichtung und/oder die Anschlagpositionssensoreinrichtung und/oder eine Hubtischsensoreinrichtung mindestens einen Schalter, insbesondere einen Näherungsschalter, beispielsweise einen induktiven Näherungsschalter, aufweist/aufweisen.

## Geänderte Patentansprüche

### Geänderte Patentansprüche gemäss Regel 137(2) EPÜ.

**1.** Verfahren zum Betrieb eines fahrerlosen Transportfahrzeugs (1), beispielsweise eines Wechselbrückenhubwagens, einer Zugmaschine oder eines Industriehubwagens, zur Aufnahme eines Ladungsträgers (2), beispielsweise einer Wechselbrücke (3, 3') oder eines Containers, umfassend die folgenden Verfahrensschritten:
- Bereitstellen des Transportfahrzeugs (1) in einer Aufnahmeposition, in welcher sich ein Hubtisch (4) einer Aufnahmeeinheit (5) unterhalb des Ladungsträgers (2) befindet,
- Anheben des Hubtisches (4) mindestens bis zu einer Kontaktierung des Hubtisches (4) mit dem Ladungsträger (2),
- Verbringen mindestens eines Verriegelungselements (14) von einer, vorzugsweise unter und/oder in dem Hubtisch (4) eingebrachten, Entriegelungsposition in eine, vorzugsweise von dem Hubtisch (4) zumindest teilweise abragende, Verriegelungsposition,
- Ermitteln einer Verriegelungselement-Position des mindestens einen Verriegelungselements (14) unter Nutzung mindestens einer Verriegelungssensoreinrichtung und Ermitteln einer Ladungsträger-Position unter Nutzung mindestens einer Ladungsträgersensoreinrichtung (17),
- Erteilen einer Fahrtfreigabe durch eine Steuereinheit, nachdem von der Steuereinheit verifiziert worden ist, dass sich das mindestens eine Verriegelungselement (14) in der Verriegelungsposition und der Ladungsträger (2) in einer Transportposition befinden.

**2.** Verfahren nach Anspruch 1, **dadurch gekennzeichnet, dass** das mindestens eine Verriegelungselement (14) mit einer Kraft von der Entriegelungsposition in die Verriegelungsposition verbracht wird, die ausreichend groß ist, um den Ladungsträger (2) anzuheben, und/oder
dass eine Fahrtfreigabe durch die Steuereinheit versagt wird, wenn keine Verifizierung durch die Steuereinheit erfolgt.

**3.** Verfahren nach Anspruch 2, **dadurch gekennzeichnet, dass** bei einem Versagen der Fahrtfreigabe durch die Steuereinheit das mindestens eine Verriegelungselement (14) in die Entriegelungsposition verbracht wird und/oder dass der Hubtisch (4) abgelassen wird.

**4.** Verfahren nach einem der Ansprüche 1 bis 3, **dadurch gekennzeichnet, dass** vor dem Verbringen des mindestens eines Verriegelungselements (14) in die Verriegelungsposition die Ladungsträger-Position unter Nutzung der mindestens einen Ladungsträgersensoreinrichtung (17) ermittelt wird und dass durch die Steuereinheit das Verbringen des mindestens einen Verriegelungselements (14) in die Verriegelungsposition veranlasst wird, nachdem von der Steuereinheit verifiziert worden ist, dass sich der Ladungsträger (2) in der Transportposition befindet.

**5.** Verfahren nach einem der Ansprüche 1 bis 4, **dadurch gekennzeichnet, dass** an der Aufnahmeeinheit (5) ein erster Anschlag (6) und ein zu dem ersten Anschlag (6) entgegen der Fahrtrichtung gesehen versetzt positionierter zweiter Anschlag (7) angeordnet sind, wobei vor Aufnahme eines ersten, längeren Ladungsträgers (2) der zweite Anschlag (7) in eine zumindest teilweise in den Hubtisch (4) eingebrachte Deaktivierungsposition verbracht wird und wobei vor Aufnahme eines zweiten, kürzeren Ladungsträgers (2) der zweite Anschlag (7) in eine zumindest teilweise vom dem Hubtisch (4) abragende Aktivierungsposition verbracht wird.

**6.** Verfahren Anspruch 5, **dadurch gekennzeichnet, dass** die Fahrtfreigabe durch die Steuereinheit erteilt wird, nachdem die Steuereinheit über eine erste Anschlagberührungssensoreinrichtung oder eine zweite Anschlagberührungssensoreinrichtung verifiziert hat, dass der Ladungsträger (2) den ersten Anschlag (7) oder den zweiten Anschlag (7) berührt.

**7.** Verfahren nach einem der Ansprüche 5 oder 6, **dadurch gekennzeichnet, dass** durch die Steuereinheit mittels einer Anschlagpositionssensoreinrichtung erkannt wird, ob sich der zweite Anschlag (7) in der Aktivierungsposition oder in der Deaktivierungsposition befindet, vorzugsweise
wobei die Steuereinheit die erste Anschlagberührungssensoreinrichtung auswertet, wenn sich der zweite Anschlag (7) in der Deaktivierungsposition befindet und die zweite Anschlagberührungssensoreinrichtung auswertet, wenn sich der zweite Anschlag (7) in der Aktivierungsposition befindet.

**8.** Verfahren nach einem der Ansprüche 1 bis 7, **dadurch gekennzeichnet, dass** zwischen der Erteilung der Fahrtfreigabe und dem Erreichen einer Zielposition die mindestens eine Verriegelungssensoreinrichtung, die mindestens eine Ladungsträgersensoreinrichtung (17), die erste Anschlagberührungssensoreinrichtung, die zweite Anschlagberührungssensoreinrichtung und/oder die Anschlagpositionssensoreinrichtung von der Steuereinheit nicht ausgewertet werden, und/oder dass zwischen der Erteilung der Fahrtfreigabe und dem Erreichen einer Zielposition die mindestens eine Verriegelungssensoreinrichtung, die mindestens eine Ladungsträgersensoreinrichtung (17), die erste Anschlagberührungssensoreinrichtung, die zweite Anschlagberührungssensoreinrichtung und/oder die Anschlagpositionssensoreinrichtung von der Steuereinheit deaktiviert werden.

**9.** Fahrerloses Transportfahrzeug (1), beispielsweise Wechselbrückenhubwagen, Zugmaschine oder Industriehubwagen, zur Aufnahme eines Ladungsträgers (2), beispielsweise einer Wechselbrücke (3, 3') oder eines Containers, mit einer Aufnahmeeinheit (5) umfassend einen Hubtisch (4) zur Aufnahme des Ladungsträgers (2), mindestens einem Verriegelungselement (14), wobei das Verriegelungselement (14) zwischen einer, vorzugsweise von dem Hubtisch (4) zumindest teilweise abragenden, Verriegelungsposition und einer, vorzugsweise in dem Hubtisch (4) eingebrachten, Entriegelungsposition verbringbar ist,
mindestens einer Verriegelungssensoreinrichtung zur Bestimmung einer Verriegelungselement-Position,
mindestens einer Ladungsträgersensoreinrichtung (17) zur Bestimmung einer Ladungsträger-Position, und
mit einer Steuereinheit, wobei die Steuereinheit mit der Aufnahmeeinheit (5), dem mindestens einen Verriegelungselement (14), der mindestens einen Verriegelungssensoreinrichtung und der mindestens einen Ladungsträgersensoreinrichtung (17) verbunden und zur Durchführung eines Verfahrens nach einem der Ansprüche 1 bis 8 ausgebildet ist.

**10.** Transportfahrzeug (1) nach Anspruch 9, **dadurch gekennzeichnet, dass** die Verriegelungssensoreinrichtung einen ersten Sensor (15) zur Überwachung der Verriegelungsposition des mindestens einen Verriegelungselements (14) und einen zweiten Sensor (16) zur Überwachung der Entriegelungsposition des mindestens einen Verriegelungselements (14) aufweist, und/oder
dass ein erstes Verriegelungselement (14) und ein zweites Verriegelungselement (14) angeordnet sind.

**11.** Transportfahrzeug (1) nach Anspruch 10, **dadurch gekennzeichnet, dass** das erste Verriegelungselement (14) und das zweite Verriegelungselement (14) derart positioniert sind, dass die Verriegelungselemente (14) senkrecht zur Fahrtrichtung gesehen in gegenüberliegende Eckbereiche des Ladungsträgers (2) eingreifen.

**12.** Transportfahrzeug (1) nach einem der Ansprüche 9 bis 11, **dadurch gekennzeichnet, dass** an der Aufnahmeeinheit (5) ein erster Anschlag (6) und ein zu dem ersten Anschlag (6) entgegen der Fahrtrichtung gesehen versetzt positionierter zweiter Anschlag (7) angeordnet sind, wobei der zweite Anschlag (7) zwischen einer zumindest teilweise in den Hubtisch (4) eingebrachten Deaktivierungsposition und einer zumindest teilweise von dem Hubtisch (4) abragenden Aktivierungsposition verbringbar ist, und/oder
dass an dem ersten Anschlag (6) eine erste Anschlagberührungssensoreinrichtung (10) und an dem zweiten Anschlag (7) eine zweite Anschlagberührungssensoreinrichtung (12) angeordnet sind.

**13.** Transportfahrzeug (1) nach Anspruch 12, **dadurch gekennzeichnet, dass** an dem zweiten Anschlag (7) eine Anschlagpositionssensoreinrichtung angeordnet ist, um zu erfassen, ob sich der zweite Anschlag (7) in der Aktivierungsposition oder in der Deaktivierungsposition befindet.

**14.** Transportfahrzeug (1) nach Anspruch 13, **dadurch gekennzeichnet, dass** die Anschlagpositionssensoreinrichtung einen ersten Sensor (8) zur Überwachung der Deaktivierungsposition und einen zweiten Sensor (9) zur Überwachung der Aktivierungsposition aufweist.

**15.** Transportfahrzeug (1) nach einem der Ansprüche 9 bis 14, **dadurch gekennzeichnet, dass** die Verriegelungssensoreinrichtung und/oder die mindestens eine Ladungsträgersensoreinrichtung (17) und/oder die erste Anschlagberührungssensoreinrichtung und/oder die zweite Anschlagberührungssensoreinrichtung und/oder die Anschlagpositionssensoreinrichtung und/oder eine Hubtischsensoreinrichtung mindestens einen Schalter, insbesondere einen Näherungsschalter, beispielsweise einen induktiven Näherungsschalter, aufweist/aufweisen.

**1.** Verfahren zum Betrieb eines fahrerlosen Transportfahrzeugs (1), beispielsweise eines Wechselbrückenhubwagens, einer Zugmaschine oder eines Industriehubwagens, zur Aufnahme eines Ladungsträgers (2), beispielsweise einer Wechselbrücke (3, 3') oder eines Containers, umfassend die folgenden Verfahrensschritten:
- Bereitstellen des Transportfahrzeugs (1) in einer Aufnahmeposition, in welcher sich ein Hubtisch (4) einer Aufnahmeeinheit (5) unterhalb des Ladungsträgers (2) befindet,
- Anheben des Hubtisches (4) mindestens bis zu einer Kontaktierung des Hubtisches (4) mit dem Ladungsträger (2),
- Verbringen mindestens eines Verriegelungselements (14) von einer, vorzugsweise unter und/oder in dem Hubtisch (4) eingebrachten, Entriegelungsposition in eine, vorzugsweise von dem Hubtisch (4) zumindest teilweise abragende, Verriegelungsposition,
- Ermitteln einer Verriegelungselement-Position des mindestens einen Verriegelungselements (14) unter Nutzung mindestens einer Verriegelungssensoreinrichtung und Ermitteln einer Ladungsträger-Position unter Nutzung mindestens einer Ladungsträgersensoreinrichtung (17),
- Erteilen einer Fahrtfreigabe durch eine Steuereinheit, nachdem von der Steuereinheit verifiziert worden ist, dass sich das mindestens eine Verriegelungselement (14) in der Verriegelungsposition und der Ladungsträger (2) in einer Transportposition befinden,
wobei das mindestens eine Verriegelungselement (14) mit einer Kraft von der Entriegelungsposition in die Verriegelungsposition verbracht wird, die ausreichend groß ist, um den Ladungsträger (2) anzuheben,
und wobei die Ladungsträgersensoreinrichtung (17) derart angeordnet und ausgebildet ist, dass erkannt wird, wenn der Ladungsträger (2) durch das Verriegelungselement (14) angehoben ist und sich somit nicht mehr in der Transportposition befindet.

**2.** Verfahren nach Anspruch 1, **dadurch gekennzeichnet, dass** eine Fahrtfreigabe durch die Steuereinheit versagt wird, wenn keine Verifizierung durch die Steuereinheit erfolgt.

**3.** Verfahren nach Anspruch 2, **dadurch gekennzeichnet, dass** bei einem Versagen der Fahrtfreigabe durch die Steuereinheit das mindestens eine Verriegelungselement (14) in die Entriegelungsposition verbracht wird und/oder dass der Hubtisch (4) abgelassen wird.

**4.** Verfahren nach einem der Ansprüche 1 bis 3, **dadurch gekennzeichnet, dass** vor dem Verbringen des mindestens eines Verriegelungselements (14) in die Verriegelungsposition die Ladungsträger-Position unter Nutzung der mindestens einen Ladungsträgersensoreinrichtung (17) ermittelt wird und dass durch die Steuereinheit das Verbringen des mindestens einen Verriegelungselements (14) in die Verriegelungsposition veranlasst wird, nachdem von der Steuereinheit verifiziert worden ist, dass sich der Ladungsträger (2) in der Transportposition befindet.

**5.** Verfahren nach einem der Ansprüche 1 bis 4, **dadurch gekennzeichnet, dass** an der Aufnahmeeinheit (5) ein erster Anschlag (6) und ein zu dem ersten Anschlag (6) entgegen der Fahrtrichtung gesehen versetzt positionierter zweiter Anschlag (7) angeordnet sind, wobei vor Aufnahme eines ersten, längeren Ladungsträgers (2) der zweite Anschlag (7) in eine zumindest teilweise in den Hubtisch (4) eingebrachte Deaktivierungsposition verbracht wird und wobei vor Aufnahme eines zweiten, kürzeren Ladungsträgers (2) der zweite Anschlag (7) in eine zumindest teilweise vom dem Hubtisch (4) abragende Aktivierungsposition verbracht wird.

**6.** Verfahren Anspruch 5, **dadurch gekennzeichnet, dass** die Fahrtfreigabe durch die Steuereinheit erteilt wird, nachdem die Steuereinheit über eine erste Anschlagberührungssensoreinrichtung oder eine zweite Anschlagberührungssensoreinrichtung verifiziert hat, dass der Ladungsträger (2) den ersten Anschlag (7) oder den zweiten Anschlag (7) berührt.

**7.** Verfahren nach einem der Ansprüche 5 oder 6, **dadurch gekennzeichnet, dass** durch die Steuereinheit mittels einer Anschlagpositionssensoreinrichtung erkannt wird, ob sich der zweite Anschlag (7) in der Aktivierungsposition oder in der Deaktivierungsposition befindet, vorzugsweise
wobei die Steuereinheit die erste Anschlagberührungssensoreinrichtung auswertet, wenn sich der zweite Anschlag (7) in der Deaktivierungsposition befindet und die zweite Anschlagberührungssensoreinrichtung auswertet, wenn sich der zweite Anschlag (7) in der Aktivierungsposition befindet.

**8.** Verfahren nach einem der Ansprüche 1 bis 7, **dadurch gekennzeichnet, dass** zwischen der Erteilung der Fahrtfreigabe und dem Erreichen einer Zielposition die mindestens eine Verriegelungssensoreinrichtung, die mindestens eine Ladungsträgersensoreinrichtung (17), die erste Anschlagberührungssensoreinrichtung, die zweite Anschlagberührungssensoreinrichtung und/oder die Anschlagpositionssensoreinrichtung von der Steuereinheit nicht ausgewertet werden, und/oder dass zwischen der Erteilung der Fahrtfreigabe und dem Erreichen einer Zielposition die mindestens eine Verriegelungssensoreinrichtung, die mindestens eine Ladungsträgersensoreinrichtung (17), die erste Anschlagberührungssensoreinrichtung, die zweite Anschlagberührungssensoreinrichtung und/oder die Anschlagpositionssensoreinrichtung von der Steuereinheit deaktiviert werden.

**9.** Fahrerloses Transportfahrzeug (1), beispielsweise Wechselbrückenhubwagen, Zugmaschine oder Industriehubwagen, zur Aufnahme eines Ladungsträgers (2), beispielsweise einer Wechselbrücke (3, 3') oder eines Containers, mit einer Aufnahmeeinheit (5) umfassend einen Hubtisch (4) zur Aufnahme des Ladungsträgers (2), mindestens einem Verriegelungselement (14), wobei das Verriegelungselement (14) zwischen einer, vorzugsweise von dem Hubtisch (4) zumindest teilweise abragenden, Verriegelungsposition und einer, vorzugsweise in dem Hubtisch (4) eingebrachten, Entriegelungsposition verbringbar ist,
mindestens einer Verriegelungssensoreinrichtung zur Bestimmung einer Verriegelungselement-Position,
mindestens einer Ladungsträgersensoreinrichtung (17) zur Bestimmung einer Ladungsträger-Position, und
mit einer Steuereinheit, wobei die Steuereinheit mit der Aufnahmeeinheit (5), dem mindestens einen Verriegelungselement (14), der mindestens einen Verriegelungssensoreinrichtung und der mindestens einen Ladungsträgersensoreinrichtung (17) verbunden und zur Durchführung eines Verfahrens nach einem der Ansprüche 1 bis 8 ausgebildet ist.

**10.** Transportfahrzeug (1) nach Anspruch 9, **dadurch gekennzeichnet, dass** die Verriegelungssensoreinrichtung einen ersten Sensor (15) zur Überwachung der Verriegelungsposition des mindestens einen Verriegelungselements (14) und einen zweiten Sensor (16) zur Überwachung der Entriegelungsposition des mindestens einen Verriegelungselements (14) aufweist, und/oder
dass ein erstes Verriegelungselement (14) und ein zweites Verriegelungselement (14) angeordnet sind.

**11.** Transportfahrzeug (1) nach Anspruch 10, **dadurch gekennzeichnet, dass** das erste Verriegelungselement (14) und das zweite Verriegelungselement (14) derart positioniert sind, dass die Verriegelungselemente (14) senkrecht zur Fahrtrichtung gesehen in gegenüberliegende Eckbereiche des Ladungsträgers (2) eingreifen.

**12.** Transportfahrzeug (1) nach einem der Ansprüche 9 bis 11, **dadurch gekennzeichnet, dass** an der Aufnahmeeinheit (5) ein erster Anschlag (6) und ein zu dem ersten Anschlag (6) entgegen der Fahrtrichtung gesehen versetzt positionierter zweiter Anschlag (7) angeordnet sind, wobei der zweite Anschlag (7) zwischen einer zumindest teilweise in den Hubtisch (4) eingebrachten Deaktivierungsposition und einer zumindest teilweise von dem Hubtisch (4) abragenden Aktivierungsposition verbringbar ist, und/oder
dass an dem ersten Anschlag (6) eine erste Anschlagberührungssensoreinrichtung (10) und an dem zweiten Anschlag (7) eine zweite Anschlagberührungssensoreinrichtung (12) angeordnet sind.

**13.** Transportfahrzeug (1) nach Anspruch 12, **dadurch gekennzeichnet, dass** an dem zweiten Anschlag (7) eine Anschlagpositionssensoreinrichtung angeordnet ist, um zu erfassen, ob sich der zweite Anschlag (7) in der Aktivierungsposition oder in der Deaktivierungsposition befindet.

**14.** Transportfahrzeug (1) nach Anspruch 13, **dadurch gekennzeichnet, dass** die Anschlagpositionssensoreinrichtung einen ersten Sensor (8) zur Überwachung der Deaktivierungsposition und einen zweiten Sensor (9) zur Überwachung der Aktivierungsposition aufweist.

**15.** Transportfahrzeug (1) nach einem der Ansprüche 9 bis 14, **dadurch gekennzeichnet, dass** die Verriegelungssensoreinrichtung und/oder die mindestens eine Ladungsträgersensoreinrichtung (17) und/oder die erste Anschlagberührungssensoreinrichtung und/oder die zweite Anschlagberührungssensoreinrichtung und/oder die Anschlagpositionssensoreinrichtung und/oder eine Hubtischsensoreinrichtung mindestens einen Schalter, insbesondere einen Näherungsschalter, beispielsweise einen induktiven Näherungsschalter, aufweist/aufweisen.
